# EUROPEAN PATENT APPLICATION

(11) **EP 4 722 042 A1**
(43) Date of publication of application: **08.04.2026**
(21) Application number: 25205353.3
(22) Date of filing: 29.09.2025
(51) Int. Cl.: B60Q 1/08, B60Q 1/14, G06V 10/141, G06V 20/58

(54) **VEHICLE LIGHT CONTROL SYSTEM, PROGRAM, AND CONTROL METHOD OF VEHICLE LIGHT CONTROL SYSTEM**

(30) Priority: 04.10.2024 JP 2024174916
(71) Applicant: TOYOTA JIDOSHA KABUSHIKI KAISHA, Toyota-shi Aichi 471-8571 (JP)
(72) Inventor: NOMURA, Takuya, TOYOTA-SHI, AICHI, 471-8571 (JP)
(74) Representative: Cabinet Beau de Loménie

(57) **Abstract**

A vehicle light control system that controls irradiation of light by a lighting device of a vehicle to an irradiation control target around the vehicle, the system comprising: a camera that captures an image in an irradiation direction of the lighting device; an object detection unit that detects the irradiation control target from a captured image of the camera; a reliability calculation unit that calculates a reliability regarding detection of the irradiation control target detected by the object detection unit, based on the captured image of the camera; and a lighting device controller that controls irradiation of light from the lighting device to the irradiation control target, wherein the lighting device controller adjusts a light amount of the lighting device for the irradiation control target based on the reliability.

## Description

### CROSS-REFERENCE TO RELATED APPLICATIONS

This application is based upon and claims the benefit of priority from Japanese Patent Application No. 2024-174916, filed on October 4, 2024, the entire contents of which are incorporated herein by reference and to which the person of the art can refer when considering the present disclosure.

### TECHNICAL FIELD

The present disclosure relates to a vehicle light control system, a vehicle, a program, and a control method of a vehicle light control system.

### BACKGROUND

Conventionally, Japanese Unexamined Patent Application Publication No. 2013-086676 is known as a technical document related to a vehicle light control system. This publication discloses a vehicle spotlight system having a pedestrian dimming function that acquires a position of a pedestrian and reduces an amount of light irradiated to a region including the acquired position of the pedestrian.

### SUMMARY

However, in a conventional system having a pedestrian dimming function, there has been a problem that as a result of reducing the amount of light irradiated to a pedestrian, the detection accuracy of the pedestrian by a vehicle camera decreases and the pedestrian is lost.

One aspect of the present disclosure is a vehicle light control system that controls irradiation of light by a lighting device of a vehicle to an irradiation control target around the vehicle. The vehicle light control system includes a camera that captures an image in an irradiation direction of the lighting device, and an object detection unit that detects the irradiation control target from the captured image of the camera. The vehicle light control system also includes a reliability calculation unit that calculates a reliability regarding detection of the irradiation control target detected by the object detection unit based on the captured image of the camera, and a lighting device controller that controls irradiation of light from the lighting device to the irradiation control target. The lighting device controller adjusts a light amount of the lighting device for the irradiation control target based on the reliability.

According to the vehicle light control system according to one aspect of the present disclosure, by adjusting the light amount of the lighting device based on the reliability regarding the detection of the irradiation control target, appropriate irradiation of light to the irradiation control target can be realized. This makes it possible to set an appropriate light amount of the lighting device that allows the irradiation control target to be detected from the captured image of the camera without irradiating an excessive amount of light to the irradiation control target such as a pedestrian or a bicycle.

In the vehicle light control system according to one aspect of the present disclosure, the irradiation control target may be a pedestrian or a bicycle, and the lighting device controller may perform dimming control to suppress glare of the irradiation control target. According to this vehicle light control system, when the irradiation control target is a pedestrian or a bicycle, the lighting device controller performs the dimming control to suppress glare of the irradiation control target, thereby making it possible to suppress the occurrence of glare to the pedestrian or the bicycle by the lighting device of the vehicle.

In the vehicle light control system according to one aspect of the present disclosure, the lighting device controller may increase the light amount of the lighting device for the irradiation control target when the reliability of the irradiation control target during the dimming control becomes less than a light increase start threshold value. In the vehicle light control system according to one aspect of the present disclosure, the lighting device controller may also increase the light amount of the lighting device for the irradiation control target when an amount of decrease in the reliability of the irradiation control target during the dimming control with respect to an initial reliability, which is the reliability at an initial detection of the irradiation control target, becomes equal to or greater than a second light increase start threshold value.

In the vehicle light control system according to one aspect of the present disclosure, the lighting device controller may reduce an amount of decrease in the light amount over time in the dimming control when the reliability of the irradiation control target during the dimming control becomes less than a mitigation start threshold value, or when an amount of decrease in the reliability of the irradiation control target during the dimming control with respect to the initial reliability becomes equal to or greater than a second mitigation start threshold value.

In the vehicle light control system according to one aspect of the present disclosure, the lighting device controller may increase the light amount of the lighting device for the irradiation control target when an amount of decrease in the currently calculated reliability with respect to the previously calculated reliability becomes equal to or greater than a sudden decrease threshold value.

Another aspect of the present disclosure is a program that causes a computer of a vehicle to operate to control irradiation of light by a lighting device of the vehicle to an irradiation control target around the vehicle. This program causes the computer to operate as: an object detection unit that detects the irradiation control target from a captured image of a camera that captures an image in an irradiation direction of the lighting device; a reliability calculation unit that calculates a reliability regarding detection of the irradiation control target detected by the object detection unit, based on the captured image of the camera; and a lighting device controller that controls irradiation of light from the lighting device to the irradiation control target. The program causes the lighting device controller to adjust a light amount of the lighting device for the irradiation control target based on the reliability.

According to the program according to still another aspect of the present disclosure, by adjusting the light amount of the lighting device based on the reliability regarding the detection of the irradiation control target, appropriate irradiation of light to the irradiation control target can be realized. This makes it possible to set an appropriate light amount of the lighting device that allows the irradiation control target to be detected from the captured image of the camera without irradiating an excessive amount of light to the irradiation control target such as a pedestrian or a bicycle.

Still another aspect of the present disclosure is a control method of a vehicle light control system that controls irradiation of light by a lighting device of a vehicle to an irradiation control target around the vehicle. This control method of the vehicle light control system detects the irradiation control target from a captured image of a camera that captures an image in an irradiation direction of the lighting device. The control method of the vehicle light control system calculates a reliability regarding detection of the irradiation control target detected by the object detection unit based on the captured image of the camera, and adjusts a light amount of the lighting device for the irradiation control target based on the reliability.

According to the control method of the vehicle light control system according to still another aspect of the present disclosure, by adjusting the light amount of the lighting device based on the reliability regarding the detection of the irradiation control target, appropriate irradiation of light to the irradiation control target can be realized. This makes it possible to set an appropriate light amount of the lighting device that allows the irradiation control target to be detected from the captured image of the camera without irradiating an excessive amount of light to the irradiation control target such as a pedestrian or a bicycle.

According to each aspect of the present disclosure, by adjusting the light amount of the lighting device for the irradiation control target based on the reliability of detection of the irradiation control target, it is possible to set an appropriate light amount of the lighting device that allows the irradiation control target to be detected from the captured image of the camera.

### BRIEF DESCRIPTION OF THE DRAWINGS

FIG. 1 is a block diagram illustrating a vehicle light control system according to an embodiment.
FIG. 2A is a graph illustrating an example of a change in reliability of detection of an irradiation control target in conventional dimming control.
FIG. 2B is a graph illustrating an example of a change in reliability of detection of an irradiation control target in the dimming control of the present embodiment.
FIG. 3 is a flowchart illustrating an example of dimming control according to the present embodiment.
FIG. 4 is a flowchart illustrating a continuation of FIG. 3.
FIG. 5 is a flowchart illustrating an example of a dimming control return process.
FIG. 6 is a flowchart illustrating a modification of the flowchart of FIG. 4.

### DETAILED DESCRIPTION

Hereinafter, embodiments of the present disclosure will be described with reference to the drawings.

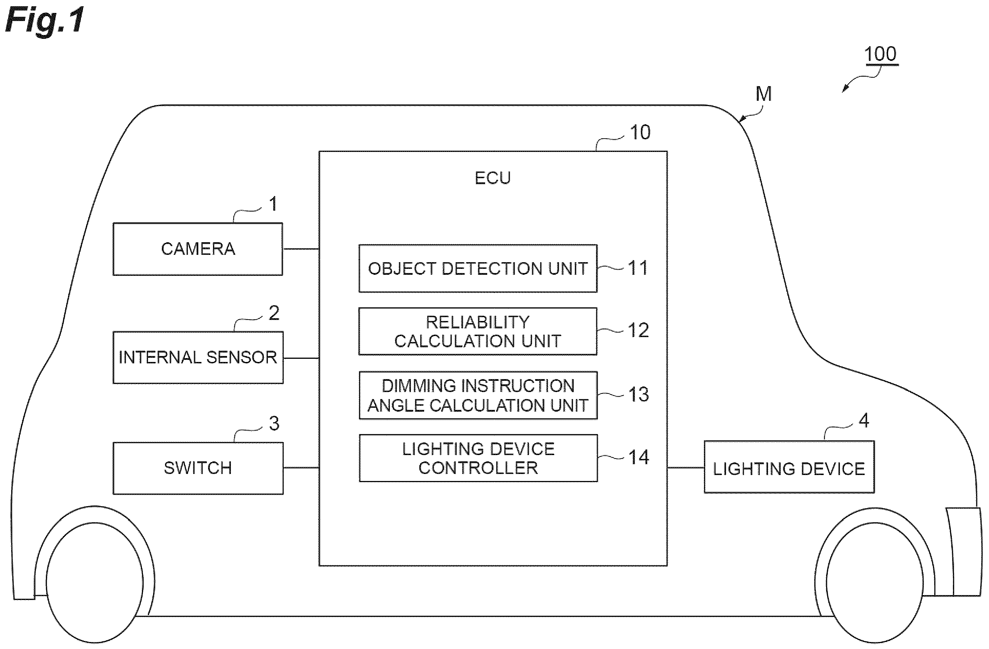

FIG. 1 is a block diagram illustrating a vehicle light control system 100 according to an embodiment. The vehicle light control system 100 illustrated in FIG. 1 is a system that is mounted on a vehicle M such as a passenger car or a freight vehicle and controls irradiation of light by a lighting device 4 of the vehicle M. The vehicle light control system 100 has a function of detecting an irradiation control target such as a pedestrian or a bicycle at night or in a space with low illuminance, and performing dimming control to reduce glare for these targets.

The dimming control for the irradiation control target may be a part of a function of an ADB (Adaptive Driving Beam), or may be a function separate from the ADB. The dimming control is executed when the lighting device 4 of the vehicle M is turned on. The dimming control may be an aspect in which it is executed only when the lighting device 4 is on high beam, or may be an aspect in which it is executed regardless of high beam or low beam. A known condition can be adopted as a start condition for the dimming control.

[Configuration of Vehicle Light Control System] The vehicle light control system 100 is provided with an ECU (Electronic Control Unit) 10 that comprehensively manages this system. The ECU 10 is an electronic control unit having a CPU (Central Processing Unit) and a storage unit. The storage unit is composed of, for example, a ROM (Read Only Memory), a RAM (Random Access Memory), an EEPROM (Electrically Erasable Programmable Read-Only Memory), and the like. In the ECU 10, for example, various functions are realized by a CPU executing a program stored in the storage unit. The ECU 10 may be composed of a plurality of electronic units. The ECU 10 is connected to a camera 1, an internal sensor 2, a switch 3, and a lighting device 4.

The camera 1 is a camera that captures an image in an irradiation direction of the lighting device 4 of the vehicle M. The camera 1 is, for example, a front camera that captures an image of a front of the vehicle M. The camera 1 is configured to be able to capture an image in, for example, a visible light region. Note that the camera 1 may be a camera that captures an image outside the visible light region. The camera 1 transmits the captured image to the ECU 10.

The internal sensor 2 is a sensor for detecting a state of the vehicle M. The internal sensor 2 detects at least a state of the lighting device 4 of the vehicle M. The state of the lighting device 4 is, for example, presence or absence of lighting, or a switching state between high beam and low beam. The internal sensor 2 transmits information regarding the state of the lighting device 4 to the ECU 10.

The internal sensor 2 may include a vehicle speed sensor and a yaw rate sensor. The yaw rate sensor detects a rotational angular velocity of the vehicle M around the vertical axis passing through the center of gravity of the vehicle M and transmits the information to the ECU 10.

The switch 3 is a switch for turning on and off a dimming control function. A user can enable or disable the dimming control function by operating this switch.

The lighting device 4 includes at least a headlighting device of the vehicle M. The lighting device 4 is configured to be able to adjust a light amount of light irradiated in a specific direction in response to an instruction from the ECU 10. The lighting device 4 is composed of, for example, micro LEDs or matrix LEDs. The lighting device 4 can be a so-called high-definition headlighting device.

Next, a functional configuration of the ECU 10 will be described. The ECU 10 has an object detection unit 11, a reliability calculation unit 12, a dimming instruction angle calculation unit 13, and a lighting device controller 14.

The object detection unit 11 detects an irradiation control target by image recognition based on a captured image of the camera 1. The irradiation control target is a pedestrian or a bicycle. The object detection unit 11 performs, for example, image preprocessing such as noise removal and contrast adjustment on the captured image of the camera 1. Thereafter, the object detection unit 11 extracts a feature amount for detecting the irradiation control target from the preprocessed image data.

As the feature amount, HOG (Histogram of Oriented Gradients), SIFT (Scale-Invariant Feature Transform), or the like is used. The object detection unit 11 detects the irradiation control target based on a result of the feature amount extraction. For object detection, a method of machine learning or deep learning is used. For example, the irradiation control target is detected from the feature amount using a machine learning algorithm such as a support vector machine (SVM) or a random forest. Note that the object detection unit 11 may be of an aspect that detects the irradiation control target when a state in which the reliability in the reliability calculation unit 12 described later is equal to or greater than a certain value continues for a predetermined time.

The object detection unit 11 sets a target region based on positional information of the detected irradiation control target on the captured image, and tracks the irradiation control target between consecutive image frames. For tracking the irradiation control target, a color-based tracking method or a method using optical flow can be adopted. The processing of the object detection unit 11 is not limited to the above-described content, and it is sufficient as long as the irradiation control target can be appropriately detected from the captured image of the camera 1.

The reliability calculation unit 12 calculates a reliability of detection of the irradiation control target based on the captured image of the camera 1. The reliability calculation unit 12 calculates the reliability, for example, each time the captured image of the camera 1 is updated. The reliability calculation unit 12 calculates, for example, a feature amount such as HOG, SIFT, or SURF (Speeded-Up Robust Features) in a region detected as the irradiation control target from the captured image of the camera 1. These feature amounts are used, for example, to represent a shape or a texture of the irradiation control target.

The reliability calculation unit 12 calculates the reliability of detection of the irradiation control target based on the feature amount of the irradiation control target and a prepared rule-based evaluation criterion. The reliability calculation unit 12 evaluates how much the feature amount matches a predefined rule. The reliability calculation unit 12 evaluates, for example, a degree to which the HOG feature amount matches a specific pattern. The specific pattern is prepared in advance according to the irradiation control target such as a pedestrian or a bicycle.

The reliability calculation unit 12 may calculate the reliability from the feature amount using a machine learning algorithm such as a support vector machine or a random forest. The reliability calculation unit 12 may also calculate the reliability using a deep learning-based algorithm. The reliability calculation unit 12 calculates the reliability using a deep learning algorithm such as a CNN (Convolutional Neural Network), YOLO (You Only Look Once), or SSD (Single Shot MultiBox Detector).

The reliability calculation unit 12 may use an integrated reliability calculated by a plurality of methods. The reliability calculation unit 12 may use, as the reliability of detection of the irradiation control target, a value obtained by integrating a reliability calculated on a rule basis and a reliability calculated using a deep learning-based algorithm by a predetermined calculation formula. The calculation of the reliability of detection of the irradiation control target is not limited to the above-described content. A known calculation method regarding the reliability of detection of a target object by image recognition may be adopted.

The reliability calculation unit 12 calculates an initial reliability, which is a reliability at an initial detection (when first detected) of the irradiation control target by the object detection unit 11. The initial reliability is a high value indicating that the irradiation control target has been detected.

The dimming instruction angle calculation unit 13 calculates a dimming instruction angle for performing dimming control of the lighting device 4 for the irradiation control target detected by the object detection unit 11. The dimming instruction angle is a control value for instructing a part of the lighting device 4 (for example, a matrix LED) to be dimmed corresponding to the irradiation control target.

Since the camera 1 and the lighting device 4 are mounted at different positions on the vehicle M, a distance to the irradiation control target and a lateral position with respect to the irradiation control target are different. For this reason, since positional information (coordinates) of the irradiation control target obtained by image recognition of the camera 1 cannot be used as it is for control of the lighting device 4, it is necessary to calculate and specify the dimming instruction angle. A known method can be adopted for the calculation method of the dimming instruction angle. Note that it is not necessary to be the dimming instruction angle as long as a light amount adjustment part of the lighting device 4 corresponding to the irradiation control target can be specified, and other parameters may be used.

The lighting device controller 14 executes dimming control for the irradiation control target by controlling the lighting device 4. The lighting device controller 14 executes the dimming control when the irradiation control target is detected, for example, when a user of the vehicle M has turned on the switch 3 and the lighting device 4 of the vehicle M is irradiating light. Note that an aspect in which the dimming control is performed only when the lighting device 4 is on high beam may be adopted. The dimming control is performed to suppress the occurrence of glare to the irradiation control target such as a pedestrian due to the light of the lighting device 4. In the dimming control, the light amount of the lighting device 4 is not changed suddenly, but is gradually decreased over time.

The lighting device controller 14 reduces the light amount for the irradiation control target by reducing the light amount of LEDs within a range of the dimming instruction angle of the lighting device 4 having matrix LEDs or the like. The lighting device controller 14 reduces the light amount for the irradiation control target, for example, at a constant reduction rate over time. The reduction rate does not need to be constant and may be patterned in advance.

The lighting device controller 14 adjusts the light amount of the lighting device 4 for the irradiation control target based on the reliability calculated by the reliability calculation unit 12 during execution of the dimming control. Specifically, when the reliability becomes less than a mitigation start threshold value, the lighting device controller 14 performs a dimming mitigation process that reduces an amount of decrease in the light amount over time in the dimming control. The dimming mitigation process is executed for each irradiation control target. This allows the lighting device controller 14 to suppress a sudden decrease in the reliability of detection of the irradiation control target during execution of the dimming control. Note that in the dimming mitigation process, a target value of the light amount in the dimming control may be changed to a larger value.

The mitigation start threshold value is a threshold value of reliability for starting the dimming mitigation process. The mitigation start threshold value may be changed according to at least one of a vehicle speed, an acceleration, a yaw rate of the vehicle M, and an initial reliability of the irradiation control target. The mitigation start threshold value may be changed to a larger value, for example, as the value of the vehicle speed, acceleration, or yaw rate of the vehicle M is larger. When the value of the vehicle speed, acceleration, or yaw rate of the vehicle M is large, it can be considered that the possibility that the reliability of the irradiation control target changes suddenly due to being shielded by a tree, a utility pole, or the like increases.

The lighting device controller 14 also performs a light increase process to increase the light amount of the lighting device 4 for the irradiation control target when the reliability becomes less than a light increase start threshold value. The light increase start threshold value is a threshold value of reliability for starting the light increase process. The light increase start threshold value is set to a value smaller than the mitigation start threshold value. The light increase start threshold value may also be changed according to at least one of the vehicle speed, acceleration, and yaw rate of the vehicle M, and the initial reliability of the irradiation control target, similarly to the mitigation start threshold value.

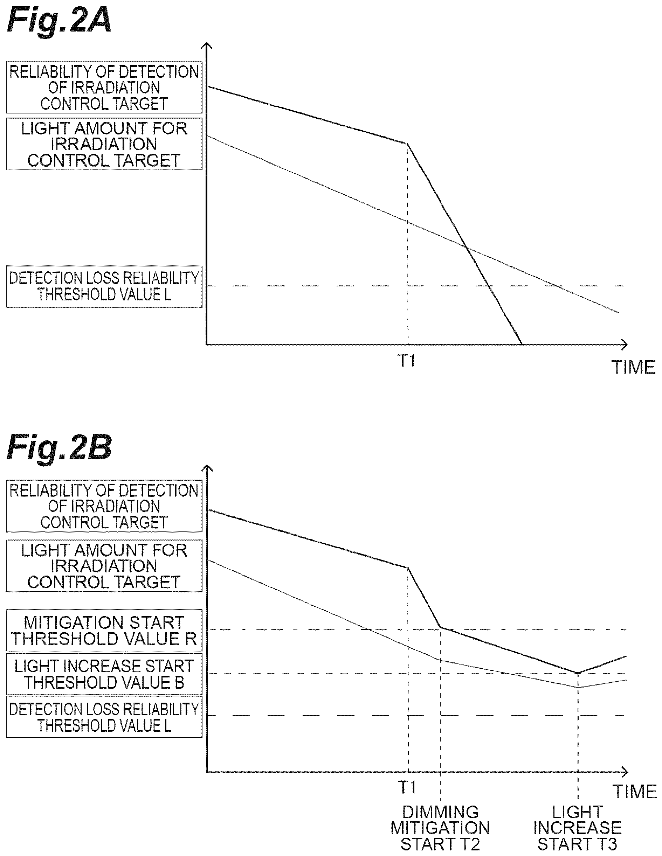

Here, FIG. 2A is a graph illustrating an example of a change in reliability of detection of an irradiation control target in conventional dimming control. This graph shows a change in the reliability of detection of the irradiation control target over time and a corresponding change in the light amount. The horizontal axis represents time, and the vertical axis represents reliability and light amount.

In the conventional dimming control, as the light amount of the vehicle's lighting device decreases over time, the reliability of detection of the irradiation control target significantly decreases, and there was a risk that the irradiation control target would be lost (undetectable). FIG. 2A shows a detection loss reliability threshold value L, which is a threshold value of reliability at which the loss of the irradiation control target is assumed, and a timing T1 at which the reliability starts to decrease significantly. Whether the reliability significantly decreases due to the dimming control varies depending on various factors such as the brightness around the vehicle, the distance between the vehicle and the irradiation control target, and the presence or absence of partial shielding by an obstacle. If the reliability significantly decreases and the irradiation control target is lost, it will cause an adverse effect on vehicle control such as automatic braking.

FIG. 2B is a graph illustrating an example of a change in reliability of detection of an irradiation control target in the dimming control of the present embodiment. This graph also shows a change in the reliability of detection of the irradiation control target over time and a corresponding change in the light amount. The horizontal axis represents time, and the vertical axis represents reliability and light amount.

FIG. 2B shows a mitigation start threshold value R and a dimming mitigation start timing T2, and a light increase start threshold value B and a light increase start timing T3. In FIG. 2B, when the reliability significantly decreases from the timing T1 and the reliability falls below the mitigation start threshold value R, the dimming mitigation process is started at the dimming mitigation start timing T2. The dimming mitigation process makes the decrease in the light amount of the lighting device 4 for the irradiation control target more gradual. This makes it possible to lengthen the time until the irradiation control target is lost due to a significant decrease in reliability. If the irradiation control target moves out of the irradiation range of the lighting device 4 of the vehicle M during that time, the loss of the irradiation control target due to the dimming control can be avoided.

In FIG. 2B, when the reliability falls below the light increase start threshold value due to a further decrease in reliability after the start of the dimming mitigation process, the light increase process is started at the light increase start timing T3. The light increase process increases the light amount of the lighting device 4 for the irradiation control target. This increases the reliability, so the loss of the irradiation control target due to the dimming control can be avoided.

The lighting device controller 14 may stop the light increase process and return to the normal dimming control when the reliability is recovered by the light increase process. The lighting device controller 14 stops the light increase process and returns to the normal dimming control, for example, when the reliability becomes equal to or greater than a dimming return threshold value. The dimming return threshold value is a threshold value for determining that the risk of loss has decreased even if returning to the dimming control. The dimming return threshold value is a threshold value larger than the mitigation start threshold value R. The dimming return threshold value may be the same value as the initial reliability, or may be a value of a certain percentage of the initial reliability (for example, a value of 90% of the initial reliability). Note that the lighting device controller 14 may return to the dimming control when a difference between the initial reliability and the reliability becomes less than a predetermined value.

Note that the lighting device controller 14 may be of an aspect that compares an amount of decrease in the reliability of the irradiation control target during the dimming control with respect to the initial reliability with various threshold values, instead of the reliability itself. The amount of decrease in the reliability of the irradiation control target during the dimming control with respect to the initial reliability is a ratio or a value (difference) by which the reliability of the irradiation control target has decreased due to a decrease in the light amount by the dimming control with the initial reliability as a reference. As an example of a case where the amount of decrease is a ratio, when the initial reliability is 100%, if the currently calculated reliability is equivalent to 80% of the initial reliability, the amount of decrease as a ratio is 20%. As an example of a case where the amount of decrease is a value, when the value of the initial reliability is 10, if the value of the currently calculated reliability is 8, the amount of decrease as a value is 2. By using the initial reliability as a reference, it is possible to make a determination that takes into account the size and type of the irradiation control target, the positional relationship between the vehicle M and the irradiation control target, the surrounding environment of the vehicle M, and other influences.

The lighting device controller 14 may, for example, perform a dimming mitigation process that reduces an amount of decrease in the light amount over time in the dimming control when an amount of decrease in the reliability of the irradiation control target during the dimming control with respect to the initial reliability becomes equal to or greater than a second mitigation start threshold value. The second mitigation start threshold value is a threshold value for determining the start of the dimming mitigation process. The second mitigation start threshold value can be, for example, 10% when the amount of decrease is a ratio.

Similarly, the lighting device controller 14 may perform a light increase process to increase the light amount of the lighting device 4 for the irradiation control target when an amount of decrease in the reliability of the irradiation control target during the dimming control with respect to the initial reliability becomes equal to or greater than a second light increase start threshold value. The second light increase start threshold value is a threshold value for determining the start of the light increase process. The second light increase start threshold value can be, for example, 20% when the amount of decrease is a ratio. The second light increase start threshold value is set as a threshold value larger than the second mitigation start threshold value.

Furthermore, the lighting device controller 14 may increase the light amount of the lighting device for the irradiation control target when an amount of decrease in the currently calculated reliability with respect to the previously calculated reliability becomes equal to or greater than a sudden decrease threshold value. The "amount of decrease in the currently calculated reliability with respect to the previously calculated reliability" is a decrease ratio of the currently calculated reliability, with reference to the previously calculated reliability among the repeatedly calculated reliabilities. The sudden decrease threshold value is a threshold value for detecting that the reliability has rapidly decreased due to some factor.

The lighting device controller 14 performs the light increase process when the amount of decrease in the currently calculated reliability with respect to the previously calculated reliability becomes equal to or greater than the sudden decrease threshold value, assuming that the probability of the irradiation control target being lost has increased. The amount of decrease in the currently calculated reliability with respect to the previously calculated reliability may also be a ratio or a value (difference). This makes it possible to cope with a case where the reliability of the irradiation control target suddenly decreases due to an external factor.

[Program] The program causes the ECU 10 (computer) to function (operate) as the above-described object detection unit 11, reliability calculation unit 12, dimming instruction angle calculation unit 13, and lighting device controller 14. The program is provided, for example, by a non-transitory recording medium such as a ROM or a semiconductor memory. The program may also be provided from a network or the like via wireless communication.

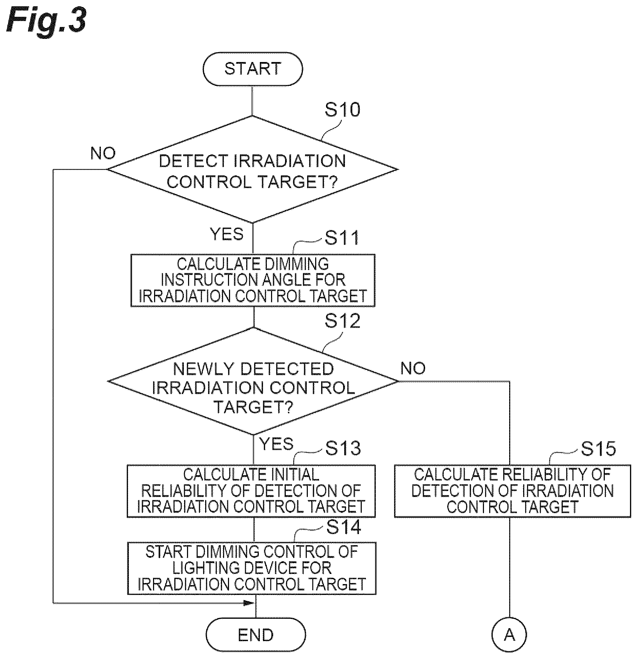

[Control Method of Vehicle Light Control System] Next, a control method of the vehicle light control system 100 according to the present embodiment will be described with reference to the drawings. FIG. 3 is a flowchart illustrating an example of dimming control according to the present embodiment. The dimming control is executed, for example, when the lighting device 4 of the vehicle M is in a lit state.

As illustrated in FIG. 3, in step S10, the ECU 10 of the vehicle light control system 100 determines whether or not an irradiation control target has been detected by the object detection unit 11. The irradiation control target is mainly a moving object such as a pedestrian or a bicycle. If the object detection unit 11 detects the irradiation control target based on the image data acquired from the camera 1, the ECU 10 proceeds to step S11. If the irradiation control target is not detected, the ECU 10 ends this process.

Next, in step S11, the ECU 10 calculates a dimming instruction angle for the irradiation control target by the dimming instruction angle calculation unit 13. The dimming instruction angle is a control value for instructing a part of the lighting device 4 to be dimmed corresponding to the irradiation control target.

Subsequently, in step S12, the ECU 10 determines whether or not it is a newly detected irradiation control target. If it is newly detected, the ECU 10 proceeds to step S13 and calculates an initial reliability by the reliability calculation unit 12. The initial reliability is an index indicating the certainty of the detection result of the irradiation control target at the timing when the irradiation control target was first detected.

After calculating the initial reliability in step S13, the ECU 10 proceeds to step S14 and starts dimming control of the lighting device 4 for the irradiation control target. The dimming control is to adjust the light amount of the lighting device 4 in order to reduce glare to the irradiation control target. Thereafter, the ECU 10 ends the current process.

On the other hand, if it is determined in step S12 that it is not a newly detected irradiation control target, the ECU 10 proceeds to step S15 and calculates a reliability of detection of the irradiation control target by the reliability calculation unit 12. The reliability calculation unit 12 calculates the reliability of detection of the irradiation control target based on the captured image of the camera 1.

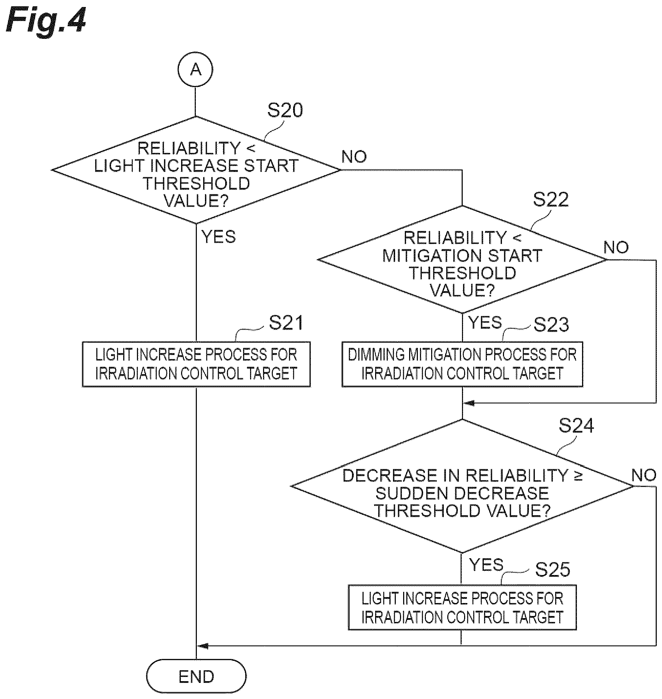

FIG. 4 is a continuation of the flowchart of FIG. 3 and illustrates a detailed process of the dimming control according to the present embodiment.

As illustrated in FIG. 4, in step S20, the ECU 10 determines by the lighting device controller 14 whether or not the reliability is less than the light increase start threshold value. If the reliability is less than the light increase start threshold value, the ECU 10 proceeds to step S21 and performs a light increase process for the irradiation control target. Thereafter, the ECU 10 ends the current process.

On the other hand, if the reliability is not less than the light increase start threshold value, the ECU 10 proceeds to step S22 and determines whether or not the reliability is less than the mitigation start threshold value. If the reliability is less than the mitigation start threshold value, the ECU 10 proceeds to step S23 and performs a dimming mitigation process for the irradiation control target. Thereafter, the ECU 10 proceeds to step S24. If the reliability is not less than the mitigation start threshold value, the ECU 10 proceeds to step S24 without performing the dimming mitigation process.

In step S24, the ECU 10 determines whether or not an amount of decrease in the currently calculated reliability with respect to the previously calculated reliability is equal to or greater than a sudden decrease threshold value. The amount of decrease in this case is an index indicating that the detection of the irradiation control target has suddenly become uncertain. If the amount of decrease in the reliability is equal to or greater than the sudden decrease threshold value, the ECU 10 proceeds to step S25 and performs a light increase process for the irradiation control target. Thereafter, the ECU 10 ends the current process. On the other hand, if the amount of decrease in the reliability is not equal to or greater than the sudden decrease threshold value, the ECU 10 ends the current process without performing the light increase process.

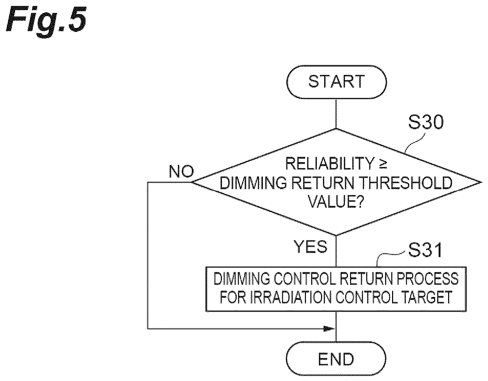

FIG. 5 is a flowchart illustrating an example of a dimming control return process. The dimming control return process is performed when the light increase process is being executed.

As illustrated in FIG. 5, in step S30, the ECU 10 determines whether or not the reliability is equal to or greater than a dimming return threshold value. If the reliability is equal to or greater than the dimming return threshold value, the ECU 10 proceeds to step S31.

In step S31, the ECU 10 performs a return of the dimming control for the irradiation control target. By returning the dimming control, it is possible to restart the process for reducing glare to the irradiation control target. On the other hand, if the reliability is not equal to or greater than the dimming return threshold value, the ECU 10 ends the current process. In this case, since the reliability has not been sufficiently increased, the return of the dimming control is not performed, and monitoring of the reliability is continued.

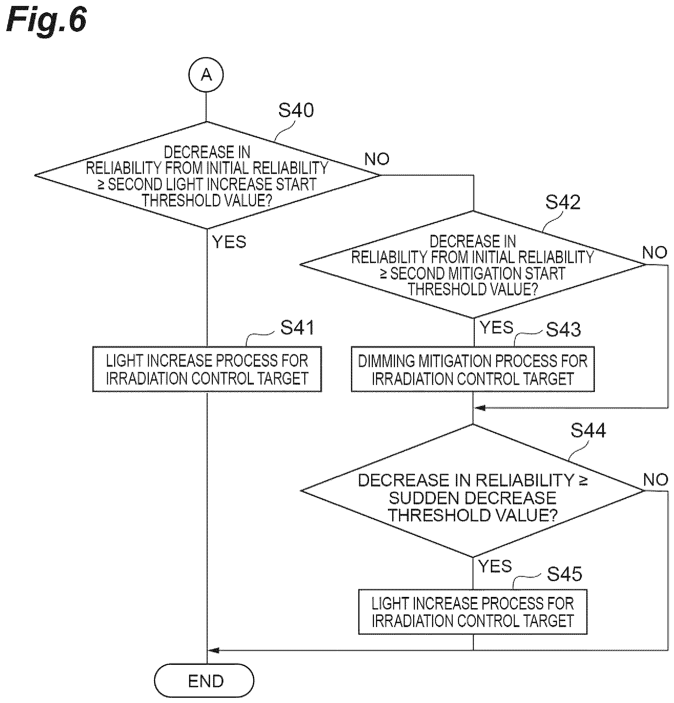

FIG. 6 is a flowchart illustrating a modification of the flowchart of FIG. 4. The ECU 10 can execute the process of the flowchart of FIG. 6 instead of the process of the flowchart of FIG. 4.

As illustrated in FIG. 6, in step S40, the ECU 10 determines by the lighting device controller 14 whether or not an amount of decrease in the reliability of the irradiation control target during the dimming control with respect to the initial reliability is equal to or greater than a second light increase start threshold value. If the amount of decrease in the reliability is equal to or greater than the second light increase start threshold value, the ECU 10 proceeds to step S41 and performs a light increase process for the irradiation control target. Thereafter, the ECU 10 ends the current process.

On the other hand, if the amount of decrease in the reliability is not equal to or greater than the second light increase start threshold value, the ECU 10 proceeds to step S42 and determines whether or not an amount of decrease in the reliability of the irradiation control target during the dimming control with respect to the initial reliability is equal to or greater than a second mitigation start threshold value. If the amount of decrease in the reliability of the irradiation control target during the dimming control with respect to the initial reliability is equal to or greater than the second mitigation start threshold value, the ECU 10 proceeds to step S43 and performs a dimming mitigation process for the irradiation control target. Thereafter, the ECU 10 proceeds to step S44. If the amount of decrease in the reliability is not equal to or greater than the second mitigation start threshold value, the ECU 10 proceeds to step S44 without performing the dimming mitigation process.

In step S44, the ECU 10 determines whether or not an amount of decrease in the currently calculated reliability with respect to the previously calculated reliability is equal to or greater than a sudden decrease threshold value. The amount of decrease in this case is an index indicating that the detection of the irradiation control target has suddenly become uncertain. If the amount of decrease in the reliability is equal to or greater than the sudden decrease threshold value, the ECU 10 proceeds to step S45 and performs a light increase process for the irradiation control target. Thereafter, the ECU 10 ends the current process. On the other hand, if the amount of decrease in the reliability is not equal to or greater than the sudden decrease threshold value, the ECU 10 ends the current process without performing the light increase process.

According to the vehicle light control system 100 according to the present embodiment described above, by adjusting the light amount of the lighting device based on the reliability regarding the detection of the irradiation control target, appropriate irradiation of light to the irradiation control target can be realized. This makes it possible to set an appropriate light amount of the lighting device that detects the irradiation control target from the captured image of the camera with sufficient reliability without irradiating an excessive amount of light to the irradiation control target such as a pedestrian or a bicycle.

According to the vehicle light control system 100, the lighting device controller 14 performs dimming control to suppress glare of the irradiation control target under a predetermined condition, thereby making it possible to suppress the occurrence of glare to a pedestrian or a bicycle by the lighting device of the vehicle.

Furthermore, according to the vehicle light control system 100, by reducing the amount of decrease in the light amount over time in the dimming control when the reliability of the irradiation control target during the dimming control becomes less than the mitigation start threshold value, or when the amount of decrease in the reliability during the dimming control with respect to the reliability at the initial detection of the irradiation control target becomes equal to or greater than the second mitigation start threshold value, it is possible to obtain a time margin until the irradiation control target is lost due to dimming.

According to the vehicle light control system 100, by increasing the light amount of the lighting device for the irradiation control target when the reliability of the irradiation control target during the dimming control becomes less than the light increase start threshold value, or when the amount of decrease in the reliability during the dimming control with respect to the reliability at the initial detection of the irradiation control target becomes equal to or greater than the second light increase start threshold value, it is possible to recover the reliability when the reliability of detection of the irradiation control target has decreased due to the dimming control.

According to the vehicle light control system 100, by increasing the light amount of the lighting device for the irradiation control target when a sudden decrease in reliability is detected, it is possible to suppress a situation where the reliability suddenly decreases and the irradiation control target is lost due to the influence of an external factor in addition to dimming. Note that the same effects can be obtained in the vehicle M equipped with the vehicle light control system 100, the program, and the control method of the vehicle light control system 100.

Although the embodiments of the present disclosure have been described above, the present disclosure is not limited to the above-described embodiments. The present disclosure can be implemented in various forms with various changes and improvements made based on the knowledge of those skilled in the art, including the above-described embodiments.

The vehicle light control system 100 does not necessarily need to perform dimming control. The vehicle light control system 100 may be of an aspect that adjusts the light amount of the lighting device for the irradiation control target based on the reliability. Specifically, the vehicle light control system 100 may increase the light amount of the lighting device 4 for the irradiation control target when the reliability of detection of the irradiation control target becomes less than the light increase start threshold value B, even when not performing dimming control while the lighting device 4 is lit. In this case, the vehicle light control system 100 may increase the reliability of detection of the irradiation control target by increasing the light amount for the body of the pedestrian, not the head.

Furthermore, the vehicle light control system 100 can use a combination of a plurality of irradiation patterns in order to increase the reliability of detection of the irradiation control target. For example, by not only increasing the light amount for the entire body of the pedestrian but also increasing the light amount for the ground at the feet of the pedestrian and the surroundings, the reliability of detection of the irradiation control target can be further improved. This makes it possible to grasp the movement and position of the pedestrian more accurately, and to improve the accuracy of the dimming control.

The vehicle light control system 100 can also use light of different wavelengths in order to increase the reliability of detection of the irradiation control target. For example, by using light of wavelengths other than visible light, such as infrared rays or ultraviolet rays, the detection accuracy of the irradiation control target can be improved. This makes it possible to reliably detect the irradiation control target even in situations with poor visibility, such as at night or in bad weather.

Furthermore, the vehicle light control system 100 can use a combination of a plurality of sensors in order to increase the reliability of detection of the irradiation control target. For example, by using sensors such as a radar or a Lidar (LIDAR) in addition to the camera 1, the position and movement of the irradiation control target can be grasped more accurately. This makes it possible to improve the reliability of detection of the irradiation control target and to further enhance the accuracy of the dimming control.

The vehicle light control system 100 does not necessarily need to perform both the dimming mitigation process and the light increase process, it may be configured to execute only one of them. The vehicle light control system 100 also does not necessarily need to perform a determination process for returning to the normal dimming control during execution of the light increase process. Furthermore, it is not essential for the vehicle light control system 100 to determine whether or not an amount of decrease in the currently calculated reliability with respect to the previously calculated reliability is equal to or greater than the sudden decrease threshold value.

## Claims

1. A vehicle light control system that controls irradiation of light by a lighting device (4) of a vehicle (M) to an irradiation control target around the vehicle (M), the system comprising:
a camera (1) that captures an image in an irradiation direction of the lighting device (4);
an object detection unit (11) that detects the irradiation control target from the captured image of the camera (1);
a reliability calculation unit (12) that calculates a reliability regarding detection of the irradiation control target detected by the object detection unit (11), based on the captured image of the camera (1); and
a lighting device controller (14) that controls irradiation of light from the lighting device (4) to the irradiation control target,
wherein the lighting device controller (14) adjusts a light amount of the lighting device (4) for the irradiation control target based on the reliability.

2. The vehicle light control system according to claim 1, wherein
the irradiation control target is a pedestrian or a bicycle, and
the lighting device controller (14) performs dimming control to suppress glare of the irradiation control target.

3. The vehicle light control system according to claim 2, wherein the lighting device controller (14) increases the light amount of the lighting device (4) for the irradiation control target when the reliability of the irradiation control target during the dimming control becomes less than a light increase start threshold value, or when an amount of decrease in the reliability of the irradiation control target during the dimming control with respect to an initial reliability, which is the reliability at an initial detection of the irradiation control target, becomes equal to or greater than a second light increase start threshold value.

4. The vehicle light control system according to claim 2 or claim 3, wherein the lighting device controller (14) reduces an amount of decrease in the light amount over time in the dimming control when the reliability of the irradiation control target during the dimming control becomes less than a mitigation start threshold value, or when an amount of decrease in the reliability of the irradiation control target during the dimming control with respect to an initial reliability, which is the reliability at an initial detection of the irradiation control target, becomes equal to or greater than a second mitigation start threshold value.

5. The vehicle light control system according to any of claims 2 to 4, wherein the lighting device controller (14) increases the light amount of the lighting device (4) for the irradiation control target when an amount of decrease in the currently calculated reliability with respect to the previously calculated reliability becomes equal to or greater than a sudden decrease threshold value.

6. A program that causes a computer of a vehicle (M) to operate to control irradiation of light by a lighting device (4) of the vehicle (M) to an irradiation control target around the vehicle (M), the program causing the computer to operate as:
an object detection unit (11) that detects the irradiation control target from a captured image of a camera (1) that captures an image in an irradiation direction of the lighting device (4);
a reliability calculation unit (12) that calculates a reliability regarding detection of the irradiation control target detected by the object detection unit (11), based on the captured image of the camera (1); and
a lighting device controller (14) that controls irradiation of light from the lighting device (4) to the irradiation control target,
wherein the program causes the lighting device controller (14) to adjust a light amount of the lighting device (4) for the irradiation control target based on the reliability.

7. A control method of a vehicle light control system that controls irradiation of light by a lighting device (4) of a vehicle (M) to an irradiation control target around the vehicle (M), the method comprising:
detecting the irradiation control target from a captured image of a camera (1) that captures an image in an irradiation direction of the lighting device (4);
calculating a reliability regarding detection of the irradiation control target based on the captured image of the camera (1); and
adjusting a light amount of the lighting device (4) for the irradiation control target based on the reliability.
